# EUROPEAN PATENT SPECIFICATION

(11) **EP 4 028 913 B1**
(45) Date of publication and mention of the grant of the patent: **26.02.2025**
(21) Application number: 20776016.6
(22) Date of filing: 09.09.2020
(51) Int. Cl.: G06F 21/33

(54) **AUTHENTICATED VEHICLE DIAGNOSTIC ACCESS TECHNIQUES**
AUTHENTIFIZIERTE FAHRZEUGDIAGNOSEZUGANGSVERFAHREN
TECHNIQUES POUR DES ACCÈS AUTHENTIFIÉS À DES DIAGNOSTICS DE VÉHICULE

(30) Priority: 10.09.2019 US 201916566070
(43) Date of publication of application: 20.07.2022
(73) Proprietor: FCA US LLC, Auburn Hills, MI 48326 (US)
(72) Inventor: MAZZARA JR, William, Waterford, Michigan 48329 (US); BARES, David, Northville, Michigan 48167 (US); BRACKMANN, Adam, Birmingham, Michigan 48009 (US)
(74) Representative: Buzzi, Notaro & Antonielli d'Oulx S.p.A.
(86) International application number: PCT/US2020/049887
(87) International publication number: WO 2021/050509

(56) References cited:
- EP-A1- 3 412 514
- EP-B1- 3 219 553
- US-A1- 2004 003 249
- US-A1- 2015 100 197
- US-A1- 2017 134 164

## Description

### FIELD

The present application generally relates to vehicle diagnostics and, more particularly, to techniques for authenticated access to vehicle diagnostics.

### BACKGROUND

A vehicle comprises various systems and/or components that are configured to be the subject of a set of diagnostics. Non-limiting examples of these diagnostics include oxygen sensor diagnostics, misfire diagnostics, evaporative emissions (EVAP) diagnostics, exhaust gas recirculation (EGR) diagnostics, and catalytic converter diagnostics. The vehicle diagnostics are typically performed by a service technician using an external testing tool. In some cases, access to these vehicle diagnostics should be limited to authorized service technicians, as access by unauthorized service technicians could potentially result in illicit operation or unintended function undesired by the customer. Conventional diagnostic access authentication techniques utilize a seed and key method where the external testing tool and the vehicle each know a secret algorithm; document EP 3412514 A1 discloses a solution in this regard. This secret algorithm, however, could be publicly shared and thus these conventional techniques are not highly secure. Accordingly, while these conventional vehicle diagnostic access authentication systems do work well for their intended purpose, there remains a need for improvement in the relevant art.

### SUMMARY

The invention is defined by the appended claims. According to one example aspect of the invention, a diagnostic access authentication system for a vehicle having a controller area network (CAN) is presented. In one exemplary implementation, the system comprises: a diagnostic interface connected to the CAN and configured to interface with an external testing tool, a set of components connected to the CAN and configured to be the subject of a set of diagnostics, and a controller connected to the CAN and further configured to perform a diagnostic authentication procedure comprising: receiving, from the external testing tool, a request for diagnostic access to the vehicle, the request comprising a public key certificate specifying a diagnostic role, wherein the external testing tool obtains the public key certificate from a public key infrastructure (PKI) computing system that stores a corresponding private key certificate, transmitting, to the external testing tool, an authentication challenge, wherein receipt of the authentication challenge causes the external testing tool to transmit the authentication challenge to the PKI computing system, receive a signed authentication challenge comprising a digital signature from the PKI computing system, and transmit the signed authentication challenge to the controller via the diagnostic interface, receiving, from the external testing tool, the signed authentication challenge, determining whether the digital signature of the signed authentication challenge is valid using the public key certificate, when the digital signature is valid, unlocking a set of diagnostics associated with the diagnostic role, and when any of the set of unlocked diagnostics associated with the diagnostic role match any of the set of diagnostics for the set of components, granting the external testing tool diagnostic access to the vehicle, thereby causing the external testing tool to execute the one or more matched diagnostics.

In some implementations, the authentication procedure further comprises denying the external testing tool diagnostic access to the vehicle when the digital signature is invalid. In some implementations, the authentication procedure further comprises denying the external testing tool diagnostic access to the vehicle when the diagnostic is not one of the set of unlocked vehicle diagnostics.

In some implementations, the PKI computing system is a local or dedicated system for the external testing tool. In some implementations, the PKI computing system is a remote system that is connected to the external testing tool via the Internet. In some implementations, the controller and the external testing tool do not share a seed and a key for authentication.

According to another example aspect of the invention, a diagnostic access authentication method for a vehicle comprising a set of components configured to be the subject of a set of diagnostics is presented. In one exemplary implementation,, the method comprises: receiving, by a controller of the vehicle and from an external testing tool, a request for diagnostic access to the vehicle, the request comprising a public key certificate specifying a diagnostic role, wherein the external testing tool obtains the public key certificate from a PKI computing system that stores a corresponding private key certificate, transmitting, by the controller and to the external testing tool, an authentication challenge, wherein receipt of the authentication challenge causes the external testing tool to transmit the authentication challenge to the PKI computing system, receive a signed authentication challenge comprising a digital signature from the PKI computing system, and transmit the signed authentication challenge to the controller, receiving, by the controller and from the external testing tool, the signed authentication challenge, determining, by the controller, whether the digital signature of the signed authentication challenge is valid using the public key certificate, when the digital signature is valid, unlocking, by the controller, a set of diagnostics associated with the diagnostic role, and when any of the set of unlocked diagnostics associated with the diagnostic role match any of the set of diagnostics for the set of components, granting, by the controller, the external testing tool diagnostic access to the vehicle, thereby causing the external testing tool to execute the one or more matched diagnostics.

In some implementations, the method further comprises denying, by the controller, the external testing tool diagnostic access to the vehicle when the digital signature is invalid. In some implementations, the method further comprises denying, by the controller, the external testing tool diagnostic access to the vehicle when the diagnostic is not one of the set of unlocked vehicle diagnostics.

In some implementations, the PKI computing system is a local or dedicated system for the external testing tool. In some implementations, the PKI computing system is a remote system that is connected to the external testing tool via the Internet. In some implementations, the controller and the external testing tool do not share a seed and a key for authentication.

Further areas of applicability of the teachings of the present disclosure will become apparent from the detailed description, claims and the drawings provided hereinafter, wherein like reference numerals refer to like features throughout the several views of the drawings. It should be understood that the detailed description, including disclosed embodiments and drawings referenced therein, are merely exemplary in nature intended for purposes of illustration only and are not intended to limit the scope of the present disclosure, its application or uses. Thus, variations that do not depart from the gist of the present disclosure are intended to be within the scope of the present disclosure.

### BRIEF DESCRIPTION OF THE DRAWINGS

FIG. 1 is a functional block diagram of an example vehicle diagnostic access authentication system according to the principles of the present disclosure; and
FIG. 2 is a flow diagram of an example vehicle diagnostic access authentication method according to the principles of the present disclosure.

### DETAILED DESCRIPTION

As previously discussed, there remains a need for more secure access authentication techniques for vehicle diagnostics. Accordingly, more secure vehicle diagnostic access authentication systems and methods are presented herein. The access authentication techniques implemented by these systems and methods utilize asymmetric authentication based on a public key infrastructure (PKI). The security of PKI-based asymmetric cryptosystems relies on the computational infeasibility to solve a non-deterministic polynomial-time hard or "NP-hard" problem. The PKI computing system of the present disclosure could utilize any suitable NP-hard problem such as, but not limited to, those utilized by the Rivest-Shamir-Adleman (RSA) and Elliptic Curve Cryptography (ECC) cryptosystems. To ensure a proper security level, an asymmetric scheme requires a longer key length than a symmetric scheme would. This feature significantly increases the complexity and thus decreases the performance or speed of asymmetric cryptosystems. Due to their increased security, however, and due to the fact that performance or speed is not an important issue for diagnostic access authentication, an asymmetric approach is preferable.

In the presented systems and methods, an external testing tool initially obtains or is issued a public key certificate from a local or remote PKI computing system (the authorized certificate authority, or CA) that also stores and does not share a corresponding private key certificate. The public key certificate obtained by the external testing tool also specifies or defines a diagnostic role, which has a set of diagnostics for a set of components associated therewith. Different service technicians/centers could be assigned different diagnostic roles by the manufacturer of the vehicle, who also could maintain the PKI computing system. The external testing tool then provides the public key certificate to the vehicle, which responds with a random authentication challenge. The external testing tool provides the challenge to the PKI computing system, which responds with a signed challenge comprising a digital signature that the external testing tool then provides to the vehicle. The vehicle then uses the public key certificate to validate the signed challenge. Any suitable digital signature generation and verification technique could be used such as, but not limited to, the digital signature algorithm (DSA), the RSA digital signature algorithm, or the ECC digital signature algorithm (ECDSA). Thus, the external testing tool only has access to public information (the public key certificate) and is never provided any secret information (the private key certificate) that could lead to a potential security issue.

When the signed challenge is validated by the vehicle controller, the set of diagnostics are unlocked and, when any of the diagnostics requested by the external testing tool match the unlocked diagnostics, the diagnostics by the external testing tool are automatically initiated. Any requested diagnostics that do not match, however, are blocked or otherwise prevented from executing. The external testing tool could also be notified of any requested diagnostics that are not authorized for the provided diagnostic role. Some conventional solutions would act as a gateway, either authorizing or not authorizing access to requested diagnostics. When not authorized, however, the requested diagnostics would simply not be executed and the service technician operating the external testing tool would be unaware of which diagnostics failed to execute and why. These diagnostics could leverage the results of previously-executed vehicle on-board diagnostics (OBD) and corresponding OBD or diagnostic trouble codes (DTCs) that are set during vehicle operation. Access could also be temporary (i.e., the certificates could expire after a period or a number of uses) to further improve the security of the system.

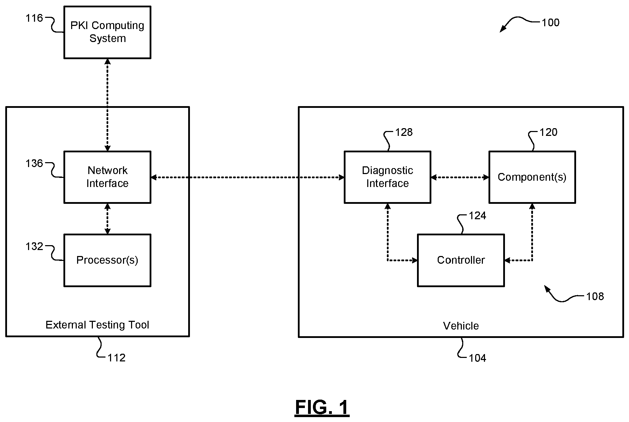

Referring now to FIG. 1, a diagnostic access authentication system 100 for a vehicle 104 is illustrated. The three main components of the system 100 are a diagnostic access authentication system 108 of the vehicle 104, an external testing tool 112, and a PKI computing system 116. System 108 generally comprises a set of components 120 of the vehicle 104 that are configured to be the subject of a set of diagnostics, a controller 124, and a diagnostic interface 128. As previously mentioned, non-limiting examples of the set of components 120 and the corresponding set of diagnostics include oxygen sensor diagnostics, engine misfire diagnostics, evaporative emissions (EVAP) diagnostics, exhaust gas recirculation (EGR) diagnostics, and catalytic converter diagnostics. It will be appreciated, however, that any suitable diagnostics could be performed on any suitable vehicle components, including vehicle components not related to emissions. While a single external testing tool 112 is illustrated, it will be appreciated that the external testing tool 112 could be a complex system multiple testing devices.

The set of components 120, the controller 124, and the diagnostic interface 128 are all connected to and in communication via a controller area network (CAN, not shown), which could be any combination of wired and/or wireless connections between the various components. The controller 120 is configured to perform at least a portion of the diagnostic access authentication techniques of the present disclosure, as described in greater detail below. It will be appreciated that the term "controller" as used herein refers to any suitable control device or set of multiple control devices that is/are configured to perform at least a portion of the techniques of the present disclosure. Non-limiting examples include an application-specific integrated circuit (ASIC), one or more processors and a non-transitory memory having instructions stored thereon that, when executed by the one or more processors, cause the controller to perform a set of operations corresponding to at least a portion of the techniques of the present disclosure. The one or more processors could be either a single processor or two or more processors operating in a parallel or distributed architecture.

While connected to the CAN of the vehicle 104, the diagnostic interface 128 is also configured to communicate with the external testing tool 112. This communication could be either via a wired connection (e.g., a special port) or a wireless connection. The external testing tool 112 generally comprises a one or more processors 132 (similar to controller 124) and a network interface 136. The network interface 136 is configured to communicate with both the diagnostic interface 128 and the PKI computing system 116. The PKI system 116 could be either a local or dedicated system (e.g., specifically for the external testing tool 112 or a set of external testing tools associated with a particular service center) or a remote system that is accessible by the external testing tool 112 via a network such as the Internet. The PKI computing system 116 stores a private key certificate that is not shared with other devices. The PKI computing system 116 also provides the external testing tool 112 with a public key certificate that specifies a diagnostic role for use in the diagnostic access authentication techniques, which will now be described in greater detail.

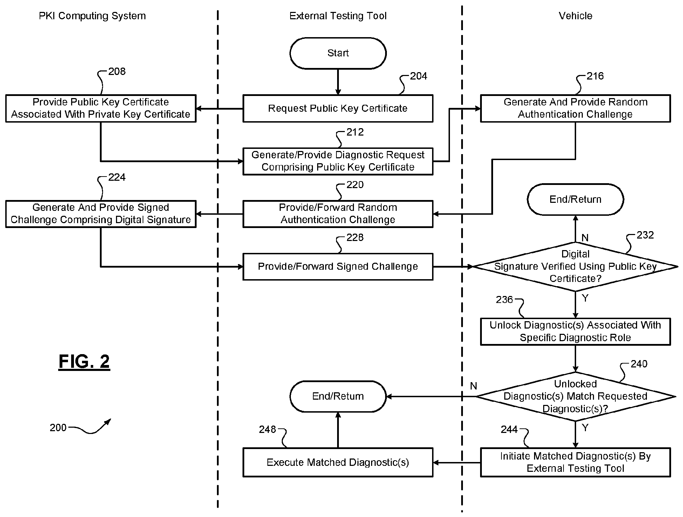

Referring now to FIG. 2, a flow diagram of an example diagnostic access authentication method 200 according to the principles of the present disclosure is illustrated. At 204, the external testing tool 112 requests a public key certificate from the PKI computing system 116. This could be, for example, in response to an input to the external texting tool 112 by a service technician. At 208, the PKI computing system 116 provides a public key certificate to the external testing tool 112. This public key certificate specifies a diagnostic role for the external testing tool 112 (i.e., what diagnostic(s) the external testing tool 112 is authorized to perform). This public key certificate also corresponds or is otherwise associated with the private key certificate stored at and not shared by the PKI computing system 116. At 212, the external testing tool 112 generates and provides a diagnostic request to the vehicle 104. The diagnostic request specifies a set of requested diagnostics which the external testing tool 112 wants access to perform. The diagnostic request also comprises the public key certificate.

At 216, the vehicle 104 generates a random authentication challenge to the public key certificate and provides the challenge to the external testing tool 112. At 220, the external testing tool 112 provides or forwards the challenge to the PKI computing system 116. At 224, the PKI computing system 116 uses the stored private key certificate to digitally sign the challenge and returns the signed challenge comprising the digital signature to the external testing tool 112. At 228, the external testing tool 112 provides or forwards the signed challenge to the vehicle 104. At 232, the vehicle 104 determines whether the digital signature is valid using the previously provided public key certificate. When valid, the method 200 proceeds to 236. When invalid, the method 200 ends or returns to 204. It will be appreciated that in the event of an invalid digital signature, the vehicle 104 could also provide a notification to the external testing tool 112 such that the service technician is aware that the digital signature was invalid and diagnostic access will not be provided. At 236, the vehicle 104 unlocks a set of diagnostics associated with the previously provided diagnostic role.

At 240, the vehicle 104 determines whether any of the requested diagnostics from the initial diagnostic request match the unlocked diagnostics. When there is at least one match, the method 200 proceeds to 240. When there are no matches, the method 200 ends or returns 204. Again, it will be appreciated that the vehicle 104 could provide a notification to the external testing tool 112 such that the service technician is aware that the requested diagnostics are not associated with their provided diagnostic role. At 240, the vehicle 104 initiates the matched diagnostics. This could include, for example, providing a notification to the external testing tool 112 to execute the matched diagnostics. In the event of only some of the requested diagnostics being matches, it will be appreciated that the vehicle 104 could also provide a notification to the external testing tool 112 such that the service technician is aware of the requested diagnostics that were not authorized by their provided diagnostic role. The method 200 then ends or returns to 204.

It should be understood that the mixing and matching of features, elements, methodologies and/or functions between various examples may be expressly contemplated herein so that one skilled in the art would appreciate from the present teachings that features, elements and/or functions of one example may be incorporated into another example as appropriate, unless described otherwise above.

## Claims

1. A diagnostic access authentication system (108) for a vehicle (104) having a controller area network (CAN), the system comprising:
a diagnostic interface (128) connected to the CAN and configured to interface with an external testing tool (112);
a set of components (120) connected to the CAN and configured to be the subject of a set of diagnostics; and
a controller (124) connected to the CAN and configured to perform a diagnostic authentication procedure including:
receiving, from the external testing tool (112), a request for diagnostic access to the vehicle, the request comprising a public key certificate specifying a diagnostic role, wherein the external testing tool (112) obtains the public key certificate from a public key infrastructure (PKI) computing system (116) that stores and does not share a corresponding private key certificate;
transmitting, to the external testing tool (112), an authentication challenge, wherein receipt of the authentication challenge causes the external testing tool (112) to transmit the authentication challenge to the PKI computing system (116), receive a signed authentication challenge comprising a digital signature from the PKI computing system (116), and transmit the signed authentication challenge to the controller via the diagnostic interface (128);
receiving, from the external testing tool (112), the signed authentication challenge;
determining whether the digital signature of the signed authentication challenge is valid using the public key certificate;
when the digital signature is valid, unlocking a set of diagnostics associated with the diagnostic role; and
when any of the set of unlocked diagnostics associated with the diagnostic role match any of the set of diagnostics for the set of components, granting the external testing tool (112) diagnostic access to the vehicle (104), thereby causing the external testing tool (112) to execute the one or more matched diagnostics.

2. The system (108) of claim 1, wherein the authentication procedure further comprises denying the external testing tool (112) diagnostic access to the vehicle (104) when the digital signature is invalid.

3. The system (108) of claim 1, wherein the authentication procedure further comprises denying the external testing tool (112) diagnostic access to the vehicle (104) when the diagnostic is not one of the set of unlocked vehicle diagnostics.

4. The system (108) of claim 1, wherein the PKI computing system (116) is a local or dedicated system for the external testing tool (112).

5. The system (108) of claim 1, wherein the PKI computing system (116) is a remote system that is connected to the external testing tool (112) via the Internet.

6. The system (108) of claim 1, wherein the controller (124) and the external testing tool (112) do not share a seed and a key for authentication.

7. A diagnostic access authentication method (200) for a vehicle (104) comprising a set of components configured to be the subject of a set of diagnostics, the method comprising:
receiving, by a controller (124) of the vehicle (104) and from an external testing tool (116), a request for diagnostic access to the vehicle (104), the request comprising a public key certificate specifying a diagnostic role, wherein the external testing tool (112) obtains the public key certificate from a public key infrastructure (PKI) computing system (116) that stores and does not share a corresponding private key certificate;
transmitting, by the controller (124) and to the external testing tool (116), an authentication challenge, wherein receipt of the authentication challenge causes the external testing tool (112) to transmit the authentication challenge to the PKI computing system (116), receive a signed authentication challenge comprising a digital signature from the PKI computing system (116), and transmit the signed authentication challenge to the controller;
receiving, by the controller (124) and from the external testing tool (112), the signed authentication challenge;
determining, by the controller (124), whether the digital signature of the signed authentication challenge is valid using the public key certificate;
when the digital signature is valid, unlocking, by the controller (124), a set of diagnostics associated with the diagnostic role; and
when any of the set of unlocked diagnostics associated with the diagnostic role match any of the set of diagnostics for the set of components, granting, by the controller (124), the external testing tool (112) diagnostic access to the vehicle (104), thereby causing the external testing tool (112) to execute the one or more matched diagnostics.

8. The method (200) of claim 7, further comprising denying, by the controller (124), the external testing tool (112) diagnostic access to the vehicle (104) when the digital signature is invalid.

9. The method (200) of claim 7, further comprising denying, by the controller (124), the external testing tool (112) diagnostic access to the vehicle (104) when the diagnostic is not one of the set of unlocked vehicle diagnostics.

10. The method (200) of claim 7, wherein the PKI computing system (116) is a local or dedicated system for the external testing tool (112).

11. The method (200) of claim 7, wherein the PKI computing system (116) is a remote system that is connected to the external testing tool (112) via the Internet.

12. The method (200) of claim 7, wherein the controller (124) and the external testing tool (112) do not share a seed and a key for authentication.

## Patentansprüche

1. Diagnosezugangsauthentifizierungssystem (108) für ein Fahrzeug (104) mit einem Steuerbereichsnetzwerk (CAN), wobei das System Folgendes umfasst:
eine Diagnoseschnittstelle (128), die mit dem CAN verbunden und dazu ausgelegt ist, mit einem externen Prüfwerkzeug (112) zu verbinden;
einen Satz von Komponenten (120), die mit dem CAN verbunden und dazu ausgelegt sind, Gegenstand eines Satzes von Diagnosen zu sein; und
eine Steuervorrichtung (124), die mit dem CAN verbunden und dazu ausgelegt ist, eine Diagnoseauthentifizierungsprozedur durchzuführen, die Folgendes beinhaltet:
Empfangen einer Anforderung für einen Diagnosezugang zu dem Fahrzeug aus dem externen Prüfwerkzeug (112), wobei die Anforderung ein öffentliches Schlüsselzertifikat umfasst, das eine Diagnoserolle spezifiziert, wobei das externe Prüfwerkzeug (112) das öffentliche Schlüsselzertifikat aus einem öffentlichen Schlüsselinfrastruktur(PKI)-Rechensystem (116) erhält, das ein entsprechendes privates Schlüsselzertifikat speichert und nicht teilt;
Übertragen einer Authentifizierungsaufforderung an das externe Prüfwerkzeug (112), wobei der Empfang der Authentifizierungsaufforderung bewirkt, dass das externe Prüfwerkzeug (112) die Authentifizierungsaufforderung an das PKI-Rechensystem (116) überträgt, eine signierte Authentifizierungsaufforderung, die eine digitale Signatur umfasst, aus dem PKI-Rechensystem (116) empfängt und die signierte Authentifizierungsaufforderung über die Diagnoseschnittstelle (128) an die Steuervorrichtung überträgt;
Empfangen der signierten Authentifizierungsaufforderung aus dem externen Prüfwerkzeug (112);
Bestimmen unter Verwendung des öffentlichen Schlüsselzertifikats, ob die digitale Signatur der signierten Authentifizierungsaufforderung gültig ist;
wenn die digitale Signatur gültig ist, Freischalten eines Satzes von Diagnosen, die der Diagnoserolle zugeordnet sind; und
wenn eine des Satzes von freigeschalteten Diagnosen, die der Diagnoserolle zugeordnet sind, mit einer des Satzes von Diagnosen für den Satz von Komponenten übereinstimmt, Gewähren des Diagnosezugangs zu dem Fahrzeug (104) für das externe Prüfwerkzeug (112), wodurch bewirkt wird, dass das externe Prüfwerkzeug (112) die eine oder die mehreren übereinstimmenden Diagnosen ausführt.

2. System (108) nach Anspruch 1, wobei die Authentifizierungsprozedur ferner das Verweigern des Diagnosezugangs des externen Prüfwerkzeugs (112) zu dem Fahrzeug (104) umfasst, wenn die digitale Signatur ungültig ist.

3. System (108) nach Anspruch 1, wobei die Authentifizierungsprozedur ferner das Verweigern des Diagnosezugangs des externen Prüfwerkzeugs (112) zu dem Fahrzeug (104) umfasst, wenn die Diagnose nicht eine aus dem Satz von freigeschalteten Fahrzeugdiagnosen ist.

4. System (108) nach Anspruch 1, wobei das PKI-Rechensystem (116) ein lokales oder dediziertes System für das externe Prüfwerkzeug (112) ist.

5. System (108) nach Anspruch 1, wobei das PKI-Rechensystem (116) ein Fernsystem ist, das über das Internet mit dem externen Prüfwerkzeug (112) verbunden ist.

6. System (108) nach Anspruch 1, wobei die Steuervorrichtung (124) und das externe Prüfwerkzeug (112) keinen Seed und keinen Schlüssel für die Authentifizierung teilen.

7. Diagnosezugangsauthentifizierungsverfahren (200) für ein Fahrzeug (104), das einen Satz von Komponenten umfasst, die dazu ausgelegt sind, Gegenstand eines Satzes von Diagnosen zu sein, wobei das Verfahren Folgendes umfasst:
Empfangen einer Anforderung für Diagnosezugang zu dem Fahrzeug (104) durch eine Steuervorrichtung (124) des Fahrzeugs (104) und aus einem externen Prüfwerkzeug (116), wobei die Anforderung ein öffentliches Schlüsselzertifikat umfasst, das eine Diagnoserolle spezifiziert, wobei das externe Prüfwerkzeug (112) das öffentliche Schlüsselzertifikat aus einem öffentlichen Schlüsselinfrastruktur(PKI)-Rechensystem (116) erhält, das ein entsprechendes privates Schlüsselzertifikat speichert und nicht teilt;
Übertragen einer Authentifizierungsaufforderung durch die Steuervorrichtung (124) an das externe Prüfwerkzeug (116), wobei der Empfang der Authentifizierungsaufforderung bewirkt, dass das externe Prüfwerkzeug (112) die Authentifizierungsaufforderung an das PKI-Rechensystem (116) überträgt, eine signierte Authentifizierungsaufforderung, die eine digitale Signatur umfasst, aus dem PKI-Rechensystem (116) empfängt und die signierte Authentifizierungsaufforderung an die Steuervorrichtung überträgt;
Empfangen der signierten Authentifizierungsaufforderung durch die Steuervorrichtung (124) aus dem externen Prüfwerkzeug (112);
Bestimmen durch die Steuervorrichtung (124) unter Verwendung des öffentlichen Schlüsselzertifikats, ob die digitale Signatur der signierten Authentifizierungsaufforderung gültig ist;
wenn die digitale Signatur gültig ist, Freischalten eines Satzes von Diagnosen, die der Diagnoserolle zugeordnet sind, durch die Steuervorrichtung (124); und
wenn eine des Satzes von freigeschalteten Diagnosen, die der Diagnoserolle zugeordnet sind, mit einer des Satzes von Diagnosen für den Satz von Komponenten übereinstimmt, Gewähren des Diagnosezugangs zu dem Fahrzeug (104) für das externe Prüfwerkzeug (112) durch die Steuervorrichtung (124), wodurch bewirkt wird, dass das externe Prüfwerkzeug (112) die eine oder die mehreren übereinstimmenden Diagnosen ausführt.

8. Verfahren (200) nach Anspruch 7, ferner umfassend das Verweigern des Diagnosezugangs zu dem Fahrzeug (104) für das externe Prüfwerkzeug (112) durch die Steuervorrichtung (124), wenn die digitale Signatur ungültig ist.

9. Verfahren (200) nach Anspruch 7, ferner umfassend das Verweigern des Diagnosezugangs zu dem Fahrzeug (104) für das externe Prüfwerkzeug (112) durch die Steuervorrichtung (124), wenn die Diagnose nicht eine des Satzes von freigeschalteten Fahrzeugdiagnosen ist.

10. Verfahren (200) nach Anspruch 7, wobei das PKI-Rechensystem (116) ein lokales oder dediziertes System für das externe Prüfwerkzeug (112) ist.

11. Verfahren (200) nach Anspruch 7, wobei das PKI-Rechensystem (116) ein Fernsystem ist, das über das Internet mit dem externen Prüfwerkzeug (112) verbunden ist.

12. Verfahren (200) nach Anspruch 7, wobei die Steuervorrichtung (124) und das externe Prüfwerkzeug (112) keinen Seed und keinen Schlüssel für die Authentifizierung teilen.

## Revendications

1. Système (108) d'authentification d'accès à des diagnostics pour un véhicule (104) doté d'un réseau CAN (Controller Area Network), le système comprenant :
une interface de diagnostics (128) connectée au CAN et configurée pour s'interfacer avec un outil de test externe (112) ;
un ensemble de composants (120) connectés au CAN et configurés pour faire l'objet d'un ensemble de diagnostics ; et
un contrôleur (124) connecté au CAN et configuré pour réaliser une procédure d'authentification de diagnostics comportant :
la réception, depuis l'outil de test externe (112), d'une demande d'accès aux diagnostics du véhicule, la demande comprenant un certificat de clé publique stipulant un rôle de diagnostic, l'outil de test externe (112) obtenant le certificat de clé publique auprès d'un système informatique (116) d'infrastructure de clés publiques (PKI) qui stocke et ne partage pas un certificat de clé privée correspondant ;
la transmission, à l'outil de test externe (112), d'un défi d'authentification, la réception du défi d'authentification amenant l'outil de test externe (112) à transmettre le défi d'authentification au système informatique (116) de PKI, recevoir un défi d'authentification signé comprenant une signature numérique depuis le système informatique (116) de PKI, et transmettre le défi d'authentification signé au contrôleur via l'interface de diagnostics (128) ;
la réception, depuis l'outil de test externe (112), du défi d'authentification signé ;
la détermination si la signature numérique du défi d'authentification signé est ou non valide à l'aide du certificat de clé publique ;
lorsque la signature numérique est valide, le déverrouillage d'un ensemble de diagnostics associés au rôle de diagnostic ; et
en cas de concordance entre l'un quelconque de l'ensemble de diagnostics déverrouillés associés au rôle de diagnostic et l'un quelconque de l'ensemble de diagnostics pour l'ensemble de composants, l'octroi à l'outil de test externe (112) de l'accès aux diagnostics du véhicule (104) pour ainsi amener l'outil de test externe (112) à exécuter les un ou plusieurs diagnostics concordants.

2. Système (108) selon la revendication 1, la procédure d'authentification comprenant en outre le refus à l'outil de test externe (112) de l'accès aux diagnostics du véhicule (104) lorsque la signature numérique est invalide.

3. Système (108) selon la revendication 1, la procédure d'authentification comprenant en outre le refus à l'outil de test externe (112) de l'accès aux diagnostics du véhicule (104) lorsque le diagnostic n'est pas l'un de l'ensemble de diagnostics déverrouillés du véhicule.

4. Système (108) selon la revendication 1, le système informatique (116) de PKI étant un système local ou dédié pour l'outil de test externe (112).

5. Système (108) selon la revendication 1, le système informatique (116) de PKI étant un système distant qui est connecté à l'outil de test externe (112) via le réseau Internet.

6. Système (108) selon la revendication 1, le contrôleur (124) et l'outil de test externe (112) ne partageant pas une semence et une clé pour l'authentification.

7. Procédé (200) d'authentification d'accès à des diagnostics pour un véhicule (104) comprenant un ensemble de composants configurés pour faire l'objet d'un ensemble de diagnostics, le procédé comprenant :
la réception, par un contrôleur (124) du véhicule (104) et depuis un outil de test externe (116), d'une demande d'accès aux diagnostics du véhicule (104), la demande comprenant un certificat de clé publique stipulant un rôle de diagnostic, l'outil de test externe (112) obtenant le certificat de clé publique auprès d'un système informatique (116) d'infrastructure de clés publiques (PKI) qui stocke et ne partage pas un certificat de clé privée correspondant ;
la transmission, par le contrôleur (124) et à l'outil de test externe (116), d'un défi d'authentification, la réception du défi d'authentification amenant l'outil de test externe (112) à transmettre le défi d'authentification au système informatique (116) de PKI, recevoir un défi d'authentification signé comprenant une signature numérique depuis le système informatique (116) de PKI, et transmettre le défi d'authentification signé au contrôleur ;
la réception, par le contrôleur (124) et depuis l'outil de test externe (112), du défi d'authentification signé ;
la détermination, par le contrôleur (124), si la signature numérique du défi d'authentification signé est ou non valide à l'aide du certificat de clé publique ;
lorsque la signature numérique est valide, le déverrouillage, par le contrôleur (124), d'un ensemble de diagnostics déverrouillés associés au rôle de diagnostic ; et
en cas de concordance entre l'un quelconque de l'ensemble de diagnostics associés au rôle de diagnostic et l'un quelconque de l'ensemble de diagnostics pour l'ensemble de composants, l'octroi, par le contrôleur (124), à l'outil de test externe (112) de l'accès aux diagnostics du véhicule (104) pour ainsi amener l'outil de test externe (112) à exécuter les un ou plusieurs diagnostics concordants.

8. Procédé (200) selon la revendication 7, comprenant en outre le refus, par le contrôleur (124), à l'outil de test externe (112) de l'accès aux diagnostics du véhicule (104) lorsque la signature numérique est invalide.

9. Procédé (200) selon la revendication 7, comprenant en outre le refus, par le contrôleur (124), à l'outil de test externe (112) de l'accès aux diagnostics du véhicule (104) lorsque le diagnostic n'est pas l'un de l'ensemble de diagnostics déverrouillés du véhicule.

10. Procédé (200) selon la revendication 7, le système informatique (116) de PKI étant un système local ou dédié pour l'outil de test externe (112).

11. Procédé (200) selon la revendication 7, le système informatique (116) de PKI étant un système distant qui est connecté à l'outil de test externe (112) via le réseau Internet.

12. Procédé (200) selon la revendication 7, le contrôleur (124) et l'outil de test externe (112) ne partageant pas une semence et une clé pour l'authentification.
